# EUROPÄISCHE PATENTSCHRIFT

(11) **EP 1 390 254 B1**
(45) Veröffentlichungstag und Bekanntmachung des Hinweises auf die Patenterteilung: **27.12.2006**
(21) Anmeldenummer: 02735268.1
(22) Anmeldetag: 18.04.2002
(51) Int. Cl.: B62D 35/02, B62D 25/20, B62D 21/09

(54) **UNTERFLURVERKLEIDUNG FÜR EIN KRAFTFAHRZEUG**
UNDERFLOOR LINING FOR A MOTOR VEHICLE
GARNITURE INFERIEURE DESTINEE A UN VEHICULE

(30) Priorität: 08.05.2001 DE 10122157
(43) Veröffentlichungstag der Anmeldung: 25.02.2004
(73) Patentinhaber: Volkswagen Aktiengesellschaft, 38436 Wolfsburg (DE)
(72) Erfinder: PANZER, Stefan, 38550 Isenbüttel (DE); FERNHOLZ, Wilfried, 38550 Isenbüttel (DE); RICHTER, Markus, 38448 Wolfsburg (DE); LIST, Andreas, 38464 Gross Twülpstedt (DE); KNUPPER, Ralf, 38550 Isenbüttel (DE)
(86) Internationale Anmeldenummer: PCT/EP2002/004276
(87) Internationale Veröffentlichungsnummer: WO 2002/090172

(56) Entgegenhaltungen:
- DE-A- 3 803 603
- DE-A- 4 440 192
- DE-B- 1 286 917
- US-A- 6 015 183
- PATENT ABSTRACTS OF JAPAN vol. 2000, no. 23, 10. Februar 2001 (2001-02-10) & JP 2001 171561 A (MITSUBISHI RAYON CO LTD), 26. Juni 2001 (2001-06-26)

## Beschreibung

Die Erfindung betrifft eine Unterflurverkleidung für ein Kraftfahrzeug gemäß dem Oberbegriff des Anspruchs 1.

Eine derartige Unterflurverkleidung für ein Kraftfahrzeug ist allgemein bekannt und deckt im montierten Zustand einen Kraftfahrzeugboden als Bodenverkleidungsteil und/oder einen Motorraum als Motorabschirmkapsel von unten her ab. Damit wird einerseits ein Schutz des Kraftfahrzeugbodens und/oder Motorraums von im Fahrbetrieb aufgewirbelten Gegenständen, wie z. B. Steinen etc. erreicht und kann andererseits auch der Unterbodenschutz, z. B. ein PVC-Unterbodenschutz minimiert werden. Letzteres sorgt für ein PVC-armes Fahrzeug, was zudem die Einhaltung der Richtlinien für Altautoentsorgung begünstigt.

Der Einsatz einer derartigen Unterflurverkleidung kann auch bei Nutzfahrzeugen oder dergleichen vorgesehen sein.

Aus der DE-A 1 286 917 ist eine gattungsgemäße Unterflurverkleidung für ein Kraftfahrzeug bekannt. Die Unterflurverkleidung weist zwei sich in Fahrzeuglängsrichtung erstreckende Längskehlen auf, die im Querschnitt rinnenförmig und nach unten offen ausgebildet sind.

Aufgabe der Erfindung ist es, eine gattungsgemäße Unterflurverkleidung für ein Kraftfahrzeug so weiterzubilden, daß eine Verbesserung des C_{w}-Wertes eines Kraftfahrzeugs sowie ein gewichtsgünstigerer Aufbau erzielbar ist.

Diese Aufgabe wird gelöst mit den Merkmalen des Anspruchs 1.

Gemäß Anspruch 1 sind an einer dem Fahrzeugboden abgewandten Außenseite der Unterflurverkleidung wenigstens in Unterflurverkleidungs-Teilbereichen eine Vielzahl von voneinander beabstandeten dellenartigen Vertiefungen ausgebildet Erfindungsgemäß sind die Vertiefungen kalottenförmig, insbesondere kugelkalottenförmig, ausgebildet. Derartige kalottenförmige Vertiefungen haben sich ebenfalls als besonders vorteilhaft hinsichtlich der Verbesserung des C_{w}-Wertes und der Erhöhung der Steifigkeit der Unterflurverkleidung erwiesen.

Mit derartigen Vertiefungen in der Unterflurverkleidung kommt es, wie erfinderseitige Versuche gezeigt haben, zu einer wesentlichen Verbesserung des C_{w}-Wertes des Kraftfahrzeugs, was sich wiederum vorteilhaft auf den Kraftstoffverbrauch und die Höchstgeschwindigkeit auswirkt.

Des weiteren wird durch die dellenartigen, kalottenförmigen Vertiefungen eine Gewichtsersparnis gegenüber herkömmlichen Ausführungen mit glatter Oberfläche erzielt. Beispielsweise können bei einer Ausführung mit einer Vielzahl von dellenartigen Vertiefungen im Gegensatz zur vergleichbaren glatten Ausführung Gewichtserspamisse von 8 bis 12 % erreicht werden. Auch dies wirkt sich vorteilhaft auf den Kraftstoffverbrauch und die Höchstgeschwindigkeit aus. Zudem kann vorteilhaft Material eingespart werden. Dies ist insbesondere der Fall, wenn die Vertiefungen als Ausnehmungen ausgebildet sind, und zwar dergestalt, daß die Unterflurverkleidung im Bereich der Vertiefungen eine geringere Wandstärke aufweist als die unmittelbar an die jeweilige Vertiefung angrenzenden Bereiche der Unterflurverkleidung. Durch diese partielle Wandstärkenreduzierung wird zudem eine vorteilhafte Erhöhung der Steifigkeit der Unterflurverkleidung erzielt, was sich insbesondere im Crashfall als günstig erweisen kann. Dies ist insbesondere dann der Fall, wenn die gesamte Unterflurverkleidung gemäß einer weiteren bevorzugten Ausgestaltung der Erfindung mit dellenartigen Vertiefungen versehen ist.

Eine besonders vorteilhafte C_{w}-Wertreduzierung ergibt sich, wenn die dellenartigen, kalottenförmigen Vertiefungen jeweils eine gleiche Geometrie aufweisen und in einem regelmäßigen Muster an der Unterflurverkleidung angeordnet sind. Beispielsweise kann für ein derartiges regelmäßiges Muster vorgesehen sein, daß die Vertiefungen in Fahrzeuglängsrichtung gesehen in nebeneinanderliegenden Reihen linienförmig an der Unterflurverkleidung verlaufend angeordnet sind.

In einer weiteren besonders bevorzugten konkreten Ausgestaltung können die unmittelbar nebeneinanderliegenden Reihen jeweils derart versetzt zueinander in Längsrichtung verlaufend angeordnet sein, daß die Vertiefungen der einen Reihe in Längsrichtung gesehen zwischen zwei Vertiefungen der anderen, benachbarten Reihe liegen. Mit einem derartigen Aufbau der Unterflurverkleidung ergibt sich einerseits eine sehr gute Versteifung der Unterflurverkleidung bei andererseits sehr gutem C_{w}-Wert des Kraftfahrzeugs. Insbesondere mit Unterflurverkleidungs-Bauteilen, die eine längliche Geometrie aufweisen, kann hier eine anzahloptimierte Anordnung von dellenartigen Vertiefungen erzielt werden. Alternativ dazu können die Vertiefungen jedoch auch konzentrisch um eine zentrale Vertiefung herum ausgebildet sein. Dies kann insbesondere für eine Unterflurverkleidung von Vorteil sein, die in etwa als rundes Bauteil ausgebildet ist, da sich auch hier dann eine anzahloptimierte Anordnung der dellenartigen Vertiefungen in der Oberfläche auf einfache Weise ausbilden läßt.

Grundsätzlich gibt es verschiedene Möglichkeiten, die dellenartigen, kalottenförmigen Vertiefungen von ihrer Geometrie her auszubilden. Eine besonders bevorzugte Ausführungsform sieht vor, daß die dellenartigen Vertiefungen jeweils eine kreisförmige Außenkontur aufweisen. Beispielsweise können die Vertiefungen dabei eine kreisrunde Außenkontur aufweisen. Mit einem derartigen geometrischen Aufbau der Vertiefungen wurden besonders günstige Ergebnisse hinsichtlich der Verbesserung des C_{w}-Wertes erzielt.

Eine besonders bevorzugte Geometrie der dellenartigen, kalottenförmigen Vertiefungen sieht vor, daß diese an der tiefsten Stelle eine Materialstärke von in etwa der Hälfte der Gesamtmaterialstärke aufweisen. So kann beispielsweise bei einer Gesamtmaterialstärke von ca. 2 mm an der tiefsten Stelle eine Restwandstärke von ca. 1 mm stehen bleiben. Trotz dieser partiellen Wandstärkenreduzierung wird die Bauteilsteifigkeit hier nicht verringert.

Die Unterflurverkleidung kann grundsätzlich als einstückiges Bauteil ausgebildet sein. Gemäß einer besonders bevorzugten Ausgestaltung der Erfindung kann die Unterfturverkleidung jedoch auch wenigstens ein Bodenverkleidungsteil zur Abdeckung wenigstens eines Teilbereichs des Unterbodens sowie zusätzlich oder alternativ dazu auch eine wenigstens einteilige Motorabschirmkapsel zur Abdeckung wenigstens eines Teilbereichs eines Motors umfassen. Diese Motorabschirmkapsel kann dabei vom Fahrzeugunterboden aus in einem Fahrzeugfrontendbereich auch nach vorne oben zu einem Hilfsrahmen im Spoilerbereich hochgezogen sein. Mit einem derartigen Aufbau ist eine besonders einfache und individuelle Anpassung an die jeweils fahrzeugtypischen Unterflurverhältnisse möglich.

Gemäß einer besonders bevorzugten Ausführungsform umfaßt die Unterflurverkleidung zwei Bodenverkleidungsteile, die randseitig angeordnet sind und in Fahrzeuglängsrichtung ausgerichtet verlaufen. Zwischen den beiden Bodenverkleidungsteilen ist hier - ein Tunnelwärmeabschirmblech angeordnet. Mit einem derartigen Aufbau braucht nur noch ein geringer Teil des Unterbodens mit einem Unterbodenschutz versehen zu werden, so daß vorteilhaft eine besonders hohe Menge von Unterbodenschutz eingespart werden kann.

Die Erfindung wird nachfolgend anhand einer Zeichnung näher erläutert:

Es zeigen:
- Fig. 1: eine schematische Unteransicht eines Bodenverkleidungsteils einer Unterflurverkleidung mit lediglich in einem Teilbereich an der Außenseite eingezeichneten dellenartigen Vertiefungen,
- Fig. 2: eine beispielhafte, schematische Schnittansicht durch ein Bodenverkleidungsteil im Bereich mehrerer dellenartigen Vertiefungen, und
- Fig. 3: eine beispielhafte, schematische Unteransicht eines Fahrzeugunterbodens mit zwei Bodenverkleidungsteilen und einem Wärmeabschirmblech.

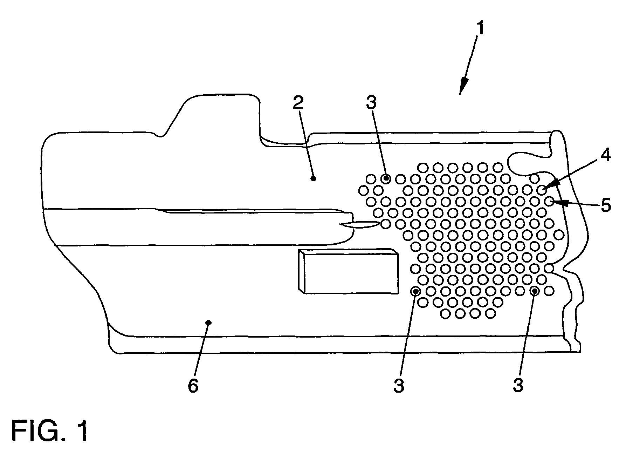

In der Fig. 1 ist schematisch eine Unteransicht eines Bodenverkleidungsteils 6 einer Unterflurverkleidung 1 für ein hier nicht dargestelltes Kraftfahrzeug gezeigt, das im montierten Zustand einen Kraftfahrzeugboden von unten her abdeckt.

An der dem Fahrzeugboden abgewandten Außenseite 2 des Bodenverkleidungsteils 6 sind eine Vielzahl von voneinander beabstandeten kugelkalottenförmigen Vertiefungen 3 ausgebildet, wobei diese Vertiefungen 3 jeweils eine gleiche Geometrie aufweisen und in einem regelmäßigen Muster am Bodenverkleidungsteil 6 angeordnet sind.

Die Vertiefungen 3 sind hier lediglich beispielhaft in einem Teilbereich an der Außenseite 2 des Bodenverkleidungsteils 6 dargestellt, wobei jedoch vorzugsweise das gesamte Bodenverkleidungsteil 6 mit den kalottenförmigen Vertiefungen 3 versehen ist.

Die Vertiefungen 3 sind hier in Fahrzeuglängsrichtung gesehen in nebeneinanderliegenden Reihen linienförmig angeordnet, von denen lediglich die Reihen 4, 5 beispielhaft mit einem Bezugszeichen versehen sind. Diese unmittelbar nebeneinanderliegenden Reihen 4, 5 sind jeweils derart in Längsrichtung versetzt zueinander verlaufend angeordnet, daß die Vertiefungen 3 der einen Reihe 4 in Längsrichtung gesehen zwischen zwei Vertiefungen der anderen, benachbarten Reihe 5 liegen.

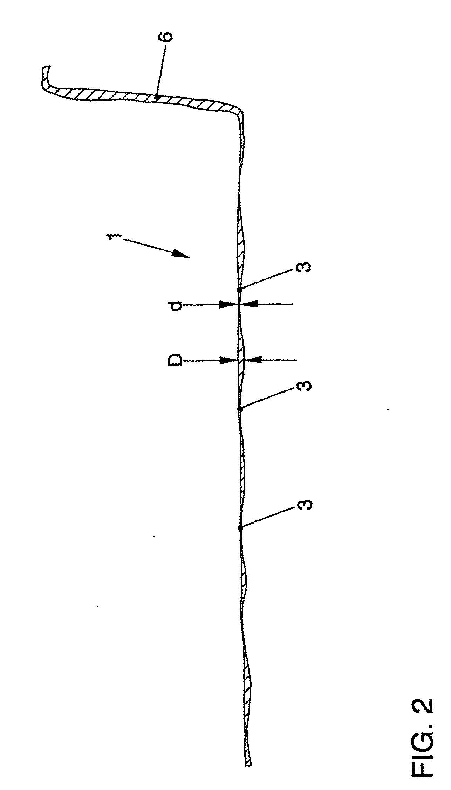

Wie dies insbesondere aus der Fig. 2 ersichtlich ist, die einen schematischen und beispielhaften Querschnitt durch mehrere Vertiefungen 3 des Bodenverkleidungsteils 6 zeigt, sind die Vertiefungen 3 als Ausnehmungen ausgebildet dergestalt, daß das Bodenverkleidungsteil 6 im Bereich der Vertiefungen 3 in etwa die Hälfte der Wandstärke d aufweist als die unmittelbar an die jeweilige Vertiefung 3 angrenzenden Bereiche des Bodenverkleidungsteils 6 als normale Wandstärke D aufweisen.

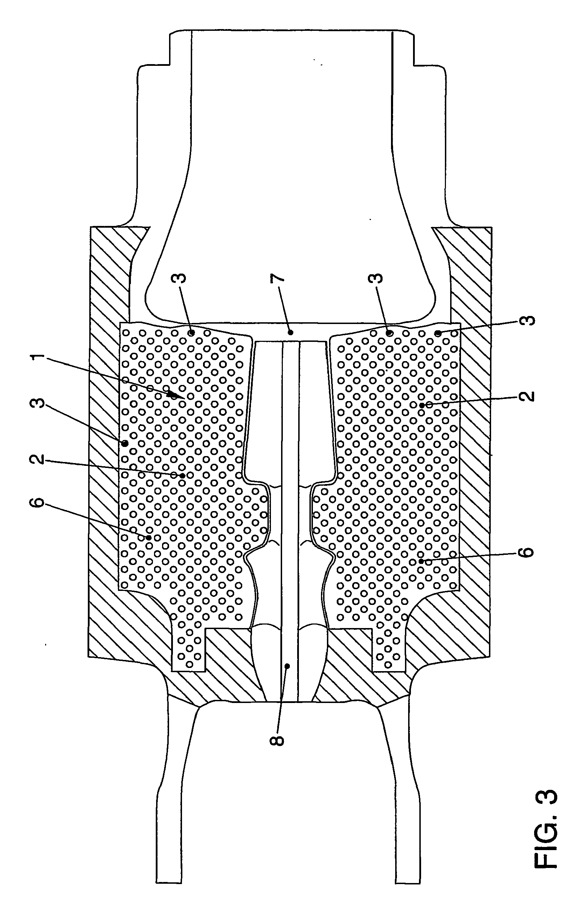

In der Fig. 3 ist schematisch eine Unteransicht auf eine Unterflurverkleidung 1 eines Fahrzeugbodens 7, die zwei Bodenverkleidungsteile 6 umfaßt, die jeweils randseitig angeordnet sind und in Fahrzeuglängsrichtung ausgerichtet sind.

Zwischen den beiden Bodenverkleidungsteilen 6 ist ein Tunnelwärmeabschirmblech 8 angeordnet. Mit einer derartigen Unterflurverkleidung 1 braucht lediglich noch ein minimaler Teil des Fahrzeugbodens mit einem Unterbodenschutz, z. B. einem PVC-Unterbodenschutz, versehen werden, wie dies in der Darstellung der Fig. 3 schraffiert und schematisch dargestellt ist.

Die Unterflurverkleidung 1 kann hier ebenfalls noch eine Motorabschirmkapsel aufweisen, was hier jedoch nicht mehr dargestellt ist.

### BEZUGSZEICHENLISTE

- 1: Unterflurverkleidung
- 2: Außenseite
- 3: Vertiefungen
- 4: Reihe
- 5: Reihe
- 6: Bodenverkleidungsteil
- 7: Fahrzeugboden
- 8: Abschirmblech
- d: Wandstärke
- D: Wandstärke

## Patentansprüche

1. Unterflurverkleidung für ein Kraftfahrzeug, das im montierten Zustand einen Kraftfahrzeugboden von unten her abdeckt,
**dadurch gekennzeichnet,**
**daß** an einer dem Fahrzeugboden (7) abgewandten Außenseite (2) der Unterflurverkleidung (1) wenigstens in Unterflurverkleidungs-Teilbereichen eine Vielzahl von voneinander beabstandeten dellenartigen, kalottenförmigen Vertiefungen (3) ausgebildet ist.

2. Unterflurverkleidung nach Anspruch 1, **dadurch gekennzeichnet, daß** die Vertiefungen (3) als Ausnehmungen ausgebildet sind dergestalt,daß die Unterflunrerkleidung (1) im Bereich der Vertiefungen (3) eine geringere Wandstärke (d) aufweist als die unmittelbar an die jeweilige Vertiefung (3) angrenzenden Bereiche des Bodenverkleidungsteils (1).

3. Unterflurverkleidung nach Anspruch 1 oder 2, **dadurch gekennzeichnet, daß** die gesamte Unterflurverkleidung (1) mit dellenartigen Vertiefungen (3) versehen ist.

4. Unterflurverkleidung nach einem der Ansprüche 1 bis 3, **dadurch gekennzeichnet, daß** die dellenartigen Vertiefungen (3) in einem regelmäßigen Muster an der Unterflurverkleidung (1) angeordnet sind.

5. Unterflurverkleidung nach Anspruch 4, **dadurch gekennzeichnet, daß** die dellenartigen Vertiefungen (3) in Fahrzeuglängsrichtung gesehen in nebeneinanderliegenden Reihen (4, 5) linienförmig an der Unterflurverkleidung (1) verlaufen.

6. Unterflurverkleidung nach Anspruch 5, **dadurch gekennzeichnet, daß** die unmittelbar nebeneina'nderliegenden Reihen (4, 5) jeweils derart versetzt zueinander in Längsrichtung verlaufend angeordnet sind, daß die Vertiefungen (3) der einen Reihe (4) in Längsrichtung gesehen zwischen zwei Vertiefungen (3) der anderen, benachbarten Reihe (5) liegen.

7. Unterflurverkleidung nach Anspruch 5 oder Anspruch 6, **dadurch gekennzeichnet, daß** die Unterflurverkleidung (1) als längliches Bauteil ausgebildet ist.

8. Unterflurverkleidung nach Anspruch 4, **dadurch gekennzeichnet, daß** die dellenartigen Vertiefungen konzentrisch um eine zentrale dellenartige Vertiefung ausgebildet sind.

9. Unterflurverkleidung nach Anspruch 8, **dadurch gekennzeichnet, daß** die Unterflurverkleidung als in etwa rundes Bauteil ausgebildet ist.

10. Unterflurverkleidung nach einem der Ansprüche 1 bis 9, **dadurch gekennzeichnet, daß** die dellenartigen Vertiefungen (3) jeweils eine kreisförmige Außenkontur aufweisen.

11. Unterflurverkleidung nach einem der Ansprüche 1 bis 10, **dadurch gekennzeichnet, daß** die Vertiefungen (3) kugelkalottenförmig ausgebildet sind.

12. Unterflurverkleidung nach einem der Ansprüche 1 bis 11, **dadurch gekennzeichnet, daß** die dellenartigen Vertiefungen (3) an der tiefsten Stelle eine Materialstärke von in etwa der Hälfte der Gesamtmaterialstärke aufweisen.

13. Unterflurverkleidung nach einem der Ansprüche 1 bis 12, **dadurch gekennzeichnet, daß** die Unterflurverkleidung (1) wenigstens ein Bodenverkteidungsteil zur Abdeckung wenigstens eines Teilbereichs des Unterbodens und/oder eine wenigstens einteilige Motorabschirmkapsel zur Abdeckung wenigstens eines Teilbereichs des Motorraums umfaßt.

14. Unterflurverkleidung nach Anspruch 13, **dadurch gekennzeichnet, daß** die Unterflurverkleidung (1) zwei Bodenverkleidungsteile (6) umfaßt, die randseitig angeordnet sind und in Fahrzeuglängsrichtung ausgerichtet verlaufen, wobei zwischen den beiden Bodenverkleidungsteilen (6) ein Tunnetwärmeabschirmblech (8) geordnet ist.

## Claims

1. Underfloor lining for a motor vehicle which, in the assembled state, covers a motor vehicle floor from below, **characterized in that**, on an outer side (2) of the underfloor lining (1) facing away from the vehicle floor (7), a plurality of dimpled, dome-shaped cavities (3) are configured, spaced apart from one another, at least in partial regions of the underfloor lining.

2. Underfloor lining according to Claim 1, **characterized in that** the cavities (3) are configured as recesses, such that the underfloor lining (1), in the region of the cavities (3), has a smaller wall thickness (d) than the regions of the floor lining part (1) immediately adjacent to the respective cavity (3).

3. Underfloor lining according to Claim 1 or 2, **characterized in that** the entire underfloor lining (1) is provided with dimpled cavities (3).

4. Underfloor lining according to one of Claims 1 to 3, **characterized in that** the dimpled cavities (3) are arranged in a regular pattern on the underfloor lining (1).

5. Underfloor lining according to Claim 4, **characterized in that**, viewed in the longitudinal direction of the vehicle, the dimpled cavities (3) extend in a linear manner in adjacent rows (4, 5) on the underfloor lining (1).

6. Underfloor lining according to Claim 5, **characterized in that** the immediately adjacent rows (4, 5) are respectively arranged to extend offset to one another in the longitudinal direction, such that, viewed in the longitudinal direction, the cavities (3) of the one row (4) are located between two cavities (3) of the other adjacent row (5).

7. Underfloor lining according to Claim 5 or Claim 6, **characterized in that** the underfloor lining (1) is configured as an elongate component.

8. Underfloor lining according to Claim 4, **characterized in that** the dimpled cavities are configured to be concentric around a central dimpled cavity.

9. Underfloor lining according to Claim 8, **characterized in that** the underfloor lining is configured as an approximately round component.

10. Underfloor lining according to one of Claims 1 to 9, **characterized in that** the respective dimpled cavities (3) have a circular outer contour.

11. Underfloor lining according to one of Claims 1 to 10, **characterized in that** the cavities (3) are of spherical cap-shaped configuration.

12. Underfloor lining according to one of Claims 1 to 11, **characterized in that**, at the deepest point, the dimpled cavities (3) have a material thickness of approximately half of the total material thickness.

13. Underfloor lining according to one of Claims 1 to 12, **characterized in that** the underfloor lining (1) comprises at least one floor lining part for covering at least one partial region of the under floor and/or an at least single-piece engine shield casing for covering at least one partial region of the engine compartment.

14. Underfloor lining according to Claim 13, **characterized in that** the underfloor lining (1) comprises two floor lining parts (6) which are arranged on the periphery and extend aligned in the longitudinal direction of the vehicle, a tunnel heat shield plate (8) being arranged between the two floor lining parts (6).

## Revendications

1. Revêtement de sous-plancher pour un véhicule à moteur qui recouvre un sol de véhicule à moteur par le bas en l'état monté, **caractérisé en ce que** sur un côté extérieur (2) opposé au sol de véhicule (7) du revêtement de sous-plancher (1), au moins dans des zones partielles de revêtement de sous-plancher, une pluralité de renfoncements (3) écartés l'un de l'autre, similaires à des bosses et en forme de calottes est formée.

2. Revêtement de sous-plancher selon la revendication 1, **caractérisé en ce que** les renfoncements (3) sont formés comme des évidements de façon à ce que le revêtement de sous-plancher (1) présente dans la zone des renfoncements (3) une épaisseur de paroi plus fine (d) que les zones de la partie de revêtement de sol (1) directement adjacentes au renfoncement (3) respectif.

3. Revêtement de sous-plancher selon la revendication 1 ou 2, **caractérisé en ce que** l'ensemble du revêtement de sous-plancher (1) est muni de renfoncements similaires à des bosses (3).

4. Revêtement de sous-plancher selon la revendication 1 à 3, **caractérisé en ce que** les renfoncements similaires à des bosses (3) sont placés dans un modèle régulier sur le revêtement de sous-plancher (1).

5. Revêtement de sous-plancher selon la revendication 4, **caractérisé en ce que** les renfoncements similaires à des bosses (3) se profilent en rangées à côté l'une de l'autre (4,5) en forme de lignes sur le revêtement de sous-plancher (1), vus dans le sens longitudinal du véhicule.

6. Revêtement de sous-plancher selon la revendication 5, **caractérisé en ce que** les rangées directement à côté l'une de l'autre (4,5) sont respectivement placées de manière décalée l'une par rapport à l'autre dans le sens longitudinal de façon à ce que les renfoncements (3) de l'une rangée (4) vus dans le sens longitudinal reposent entre deux renfoncements (3) de l'autre rangée (5) adjacente.

7. Revêtement de sous-plancher selon la revendication 5 ou la revendication 6, **caractérisé en ce que** le revêtement de sous-plancher (1) est construit comme une pièce longitudinale.

8. Revêtement de sous-plancher selon la revendication 4, **caractérisé en ce que** les renfoncements similaires à des bosses sont formés de manière concentrique autour d'un renfoncement central similaire à une bosse.

9. Revêtement de sous-plancher selon la revendication 8, **caractérisé en ce que** le revêtement de sous-plancher est construit comme une pièce presque ronde.

10. Revêtement de sous-plancher selon l'une quelconque des revendications 1 à 9, **caractérisé en ce que** les renfoncements similaires à des bosses (3) présentent respectivement un contour extérieur circulaire.

11. Revêtement de sous-plancher selon l'une quelconque des revendications 1 à 10, **caractérisé en ce que** les renfoncements (3) sont formés comme des calottes sphériques.

12. Revêtement de sous-plancher selon l'une quelconque des revendications 1 à 11, **caractérisé en ce que** les renfoncements similaires à des bosses (3) présentent au point le plus profond une épaisseur de matériau d'environ la moitié de l'épaisseur totale de matériau.

13. Revêtement de sous-plancher selon l'une quelconque des revendications 1 à 12, **caractérisé en ce que** le revêtement de sous-plancher (1) comprend au moins une partie de revêtement de sol pour recouvrir au moins une zone partielle du sous-plancher et/ou une enveloppe de blindage de moteur au moins monobloc pour recouvrir au moins une zone partielle de l'espace moteur.

14. Revêtement de sous-plancher selon la revendication 13, **caractérisé en ce que** le revêtement de sous-plancher (1) comprend deux parties de revêtement de sol (6) qui sont placées sur les bords et alignées dans le sens longitudinal du véhicule, une tôle de blindage thermique en tunnel (8) étant placée entre les deux parties de revêtement de sol (6).
